Europäisches Patentamt

European Patent Office

Office européen des brevets

(19)

(11) Veröffentlichungsnummer: **0 293 652 B1**

# EUROPÄISCHE PATENTSCHRIFT

(12)

(45) Veröffentlichungstag der Patentschrift: 02.10.91

(51) Int. Cl.⁵: **B21D 39/20**, B21D 53/84

(21) Anmeldenummer: 88107626.9

(22) Anmeldetag: 11.05.88

(54) **Aufweitsonde mit kleinem Durchmesser und grosser Länge.**

(30) Priorität: 25.05.87 DE 3717517

(43) Veröffentlichungstag der Anmeldung:
07.12.88 Patentblatt 88/49

(45) Bekanntmachung des Hinweises auf die
Patenterteilung:
02.10.91 Patentblatt 91/40

(84) Benannte Vertragsstaaten:
BE CH DE ES FR GB IT LI NL SE

(56) Entgegenhaltungen:
EP-A- 0 213 529    EP-A- 0 230 731
DE-A- 2 922 509    US-A- 3 310 972
US-A- 4 368 571    US-A- 4 420 867

(73) Patentinhaber: Emitec Gesellschaft für Emissionstechnologie mbH
Hauptstrasse 150
W-5204 Lohmar 1(DE)

(72) Erfinder: Swars, Helmut, Dipl.-Ing.
Riedweg 11
W-5060 Bergisch Gladbach 1(DE)

(74) Vertreter: Neumann, Ernst Dieter, Dipl.-Ing.
HARWARDT NEUMANN PATENTANWÄLTE
Scheerengasse 2 Postfach 1455
W-5200 Siegburg(DE)

## Beschreibung

Die vorliegende Erfindung betrifft eine Aufweitsonde nach dem Oberbegriff des 1. Anspruchs. Sonden, mit denen rohrförmige Körper durch Aufweiten in einem sie umgebenden Körper befestigt werden, sind bekannt, z. B. für das dichte Verbinden von Wärmetauscherrohren mit Rohrböden. Ebenso ist aus der DE-A-29 22 509 ein Verfahren zur Herstellung von Nockenwellen bekannt, bei dem auf eine Hohlwelle Lagerstellen oder nockenbildende Rohrabschnitte aufgeschoben und durch Aufweiten der Hohlwelle miteinander verbunden werden. Hier werden die aufzuweitenden Abschnitte der Hohlwelle nacheinander mittels eines mechanischen Werkzeuges aufgeweitet. In ihrer EP-A-0 213 529 hat eine der Anmelderinnen vorgeschlagen, eine Anzahl von Antriebselementen, wie Nokken, Zahnrädern oder Lagerschalen in einem Arbeitsgang mittels hydraulischen Aufweitens zu befestigen, indem in die Hohlwelle eine Sonde eingeschoben wird, die eine entsprechende Anzahl von durch Dichtungen abgegrenzten Abschnitten aufweist, die durch radiale Bohrungen mit einer im Inneren der Sonde verlaufenden Zuleitung für das Druckfluid in Verbindung stehen. Bei der Anwendung dieses Verfahrens auf die Fertigung von Nokkenwellen von Kraftfahrzeugmotoren hat sich einerseits ergeben, daß die aufzubringenden Drücke so hoch sind (in der Größenordnung von 3000 bar), daß die Wandstärken der Sonde mindestens 2 mm betragen müssen, um ihrerseits dem Fluiddruck widerstehen zu können; andererseits sind die Außendurchmesser dieser Nockenwellen begrenzt und damit unter Berücksichtigung der für das Erreichen einer ausreichenden Torsionsfestigkeit erforderlichen Wanddicken auch deren Innendurchmesser, z. B. auf 12 mm. Unter Berücksichtigung des zum Einführen der Sonde in die Hohlwelle erforderlichen Spiels ergeben sich so Sondendurchmesser von etwa 10 mm, denen eine erheblich größere Länge der Sonde, z. B. von 700 mm gegenübersteht. Ferner hat sich das Vorhandensein einer Ableitung für das Druckfluid als wünschenswert erwiesen, das durch geringe Undichtigkeiten an den Dichtungen in die nicht aufzuweitenden Abschnitte austritt. Das Herstellen der Zu- und Ableitung (deren Durchmesser mit Rücksicht auf den Durchmesser der Sonde nur etwa 1 bis 2 mm betragen darf) in einem so langen Sondenkörper mittels herkömmlicher Techniken, z. B. durch Bohren bereitet Schwierigkeiten.

Aufgabe der vorliegenden Erfindung ist eine Sonde von geringem Durchmesser und großer Länge mit mindestens je einer Zu- und Ableitung für Druckfluid, das durch von diesen Leitungen ausgehende, sinnvollerweise radiale Bohrungen in mehrere voneinander getrennte Aufweitabschnitte austreten kann, die fertigungstechnisch ohne Schwierigkeiten herzustellen ist.

Die Lösung dieser Aufgabe erfolgt durch die im kennzeichnenden Teil des 1. Anspruchs angegebenen Mittel. Längsnuten an der Innenseite des äußeren Hohlzylinders oder (vorzugsweise) des inneren Zylinders lassen sich ohne Schwierigkeiten durch Räumen bzw. Fräsen herstellen und schließen sich beim Ineinanderschieben der beiden Sondenteile zu Kanälen, für die ein kreisförmiger Querschnitt ja nicht erforderlich ist.

Um eine feste Verbindung zwischen den beiden Sondenteilen herzustellen und auch um einen etwa zwischen ihnen verbleibenden Mikrospalt abzudichten, wird im 2. Anspruch vorgeschlagen, die beiden Teile durch Löten oder Kleben miteinander zu verbinden.

Für diese Verbindungsverfahren empfiehlt sich die im 3. Anspruch angegebene Ausgestaltung der Erfindung, bei der die (zweckmäßigerweise ebenfalls die Gestalt von Längsnuten aufweisenden) Taschen zur Aufnahme einer ausreichenden Menge von Löt- bzw. Klebematerial dienen, das durch Erhitzen verflüssigt wird und dadurch den Spalt zwischen beiden Sondenteilen abdichtet bei gleichzeitiger stoffschlüssiger Verbindung derselben.

Ein Ausführungsbeispiel der Erfindung ist in der Zeichnung dargestellt, und zwar zeigt

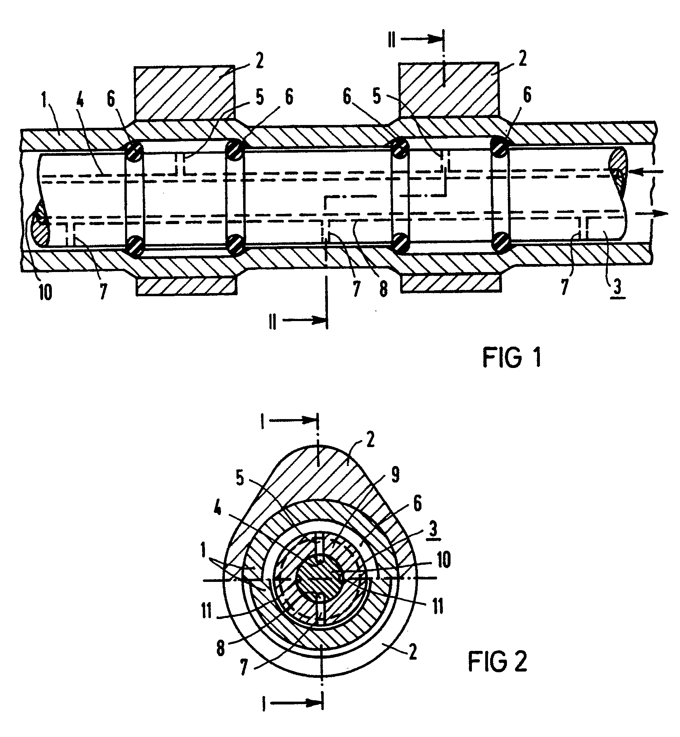

Figur 1 einen Längsaxialschnitt entsprechend der Linie I-I der Figur 2 und

Figur 2 einen Querschnitt entsprechend der Linie II-II der Figur 1.

Auf einer Hohlwelle 1 werden durch abschnittsweises Aufweiten derselben in einem Arbeitsgang mehrere Antriebselemente, z. B. Nocken 2 befestigt. Dies geschieht mittels einer Sonde 3, die eine von einer nicht gezeigten Quelle von Druckfluid ausgehende axiale Zuleitung 4 aufweist, von der aus radiale Bohrungen 5 ausgehen, die an der Außenseite der Sonde in durch umlaufende Dichtungen 6 gebildete, die aufzuweitenden Teile der Hohlwelle 1 begrenzende Abschnitte gebildet werden. Leckagen durch die Dichtungen 6 in die nicht aufzuweitenden Bereiche zwischen Sonde 3 und Hohlwelle 1 werden über weitere radiale Bohrungen 7 abgeführt, die in einer ebenfalls axial verlaufenden Ableitung 8 münden. Die Sonde 3 besteht aus einem hohlzylindrischen Außenteil 9 und einem zylindrischen Innenteil 10, die zweckmäßigerweise durch Löten oder Kleben miteinander verbunden sind. Vorzugsweise im Innenteil 10 sind die Zuleitung 4 und die Ableitung 8 in Form von eingefrästen Längsnuten angelegt. Gleichmäßig über den Umfang verteilt sind zwei weitere Nuten 11 vorhanden, die vor dem Aufziehen des Außenteiles 9 auf das Innenteil 10 mit Lot- oder Klebstoff gefüllt werden, die anschließend durch Erhitzen verflüssigt werden und den Spalt zwischen beiden Teilen abdichten.

## Patentansprüche

1. Zylindrische Sonde (3) für das abschnittsweise Aufweiten von Hohlwellen (1) mittels Fluiddruckaufgabe mit vom Ende der Sonde ausgehenden Zu- und Ableitungen (4, 8) für das Druckfluid, **dadurch gekennzeichnet**, daß der Sondenkörper (3) aus einem äußeren Hohlzylinder (9) mit im wesentlichen radialen, teilweise in den den aufzuweitenden Abschnitten der Hohlwelle (1) entsprechenden Abschnitten der Sondenoberfläche mündenden Bohrungen (5, 7) besteht, der auf einen inneren Zylinder (10) aufgeschoben ist, wobei der äußere Hohlzylinder an seiner Innen- und/oder der innere Zylinder an seiner Außenoberfläche mit zwei oder mehr Längsnuten (4, 8) versehen ist, in die die radialen Bohrungen an ihrem Innenende münden.

2. Sonde nach Anspruch 1, **dadurch gekennzeichnet**, daß der äußere Hohlzylinder (9) und der innere Zylinder (10) miteinander verlötet oder verklebt sind.

3. Sonde nach Anspruch 2, **dadurch gekennzeichnet**, daß der äußere Hohlzylinder (9) an seiner Innen- und/oder der innere Zylinder (10) an seiner Außenoberfläche mit vor dem Verlöten lotgefüllten bzw. vor dem Verkleben klebstoffgefüllten Taschen versehen ist.

## Claims

1. A cylindrical mandrel (3) for expanding portions of hollow shafts (1) by applying a fluid pressure, having supply and discharge channels (4, 8) for the pressurised fluid, characterised in that the mandrel member (3) consists of an outer hollow cylinder (9) with substantially radial bores (5, 7) some of which extend into the mandrel surface portions corresponding to the portions of the hollow shaft (1) to be expanded, which outer hollow cylinder is slid on to an inner cylinder (10), with the inner face of the outer hollow cylinder and/or the outer face of the inner cylinder being provided with two or more longitudinal grooves (4, 8) receiving the inner ends of the radial bores.

2. A mandrel according to Claim 1, characterised in that the outer hollow cylinder (9) and the inner cylinder (10) are soldered or glued together.

3. A mandrel according to Claim 2, characterised in that the inner face of the outer hollow cylinder (9) and/or the outer face of the inner cylinder (10) are provided with pockets which are filled with solder prior to the soldering operation or with glue prior to the gluing operation.

## Revendications

1. Sonde cylindrique (3) pour dilater par portions des arbres creux (1) par application d'une pression d'un fluide de pression, avec conduites d'amenée et d'évacuation (4,8) de fluide de pression partant de l'extrémité de la sonde, caractérisée par le fait que le corps de sonde (3) est constitué par un cylindre extérieur creux (9), avec des trous (5,7) sensiblement radiaux qui débouchent en partie dans les portions de la surface extérieure de la sonde correspondant aux portions à dilater de l'arbre creux (1), ledit cylindre extérieur creux étant passé par-dessus un cylindre intérieur (10), et ce cylindre extérieur creux étant muni, en sa surface intérieure, et/ou ledit cylindre intérieur étant muni, en sa surface extérieure, d'au moins deux rainures longitudinales (4,8) dans lesquelles les trous radiaux débouchent en leurs extrémités intérieures.

2. Sonde selon revendication 1, caractérisée par le fait que le cylindre extérieur creux (9) et le cylindre intérieur (10) sont soudés ou collés l'un à l'autre.

3. Sonde selon revendication 2, caractérisée par le fait que le cylindre extérieur creux (9) est muni en sa surface intérieure, et/ou le cylindre intérieur (10) est muni en sa surface extérieure, de poches remplies de soudure avant le soudage ou, selon le cas, de colle avant le collage.

FIG 1

FIG 2